# EUROPEAN PATENT APPLICATION

(11) **EP 1 517 398 A1**
(43) Date of publication of application: **23.03.2005**
(21) Application number: 03717838.1
(22) Date of filing: 24.03.2003
(51) Int. Cl.: H01Q 1/38, H04B 7/04, H01Q 1/24

(54) **VARIABLE BEAM ANTENNA DEVICE, TRANSMITTER-RECEIVER AND NETWORK NOTEBOOK**

(30) Priority: 27.03.2002 RU 2002108661
(71) Applicant: Obschestvo S Ogranichennoy Otvetstvennostju "Algoritm", St. Petersburg, 190013 (RU)
(72) Inventor: ABRAMOV, Oleg Jurievich, St. Petersburg, 198330 (RU); KASHKAROV, Aleksandr Germanovich, St. Petersburg, 190000 (RU); NAGAEV, Farid Ibragimovich, St.Petersburg, 199178 (RU)
(74) Representative: Wagner & Geyer
(86) International application number: PCT/RU2003/000119
(87) International publication number: WO 2003/081718

(57) **Abstract**

The invention is related to antenna systems and transceiving equipment for network portable computers. The antenna system comprises a flat substrate (2), carrying at least two directional flat antennas oriented in a fan-like fashion (3), and a commutation switch (6) to control the directional pattern of the antenna system. The commutation switch is made so as to make it possible to switch on to one or two or more antennas simultaneously. The transceiving device comprises the antenna system (1), a reception/transmission switch (12), a transmitter (14), a receiver (16), an antenna system operation control unit (18) to control the operation of the antenna system in omnidirectional mode, directional scanning mode or stationary directional mode, and a controller (17). It can also be supplemented with a signal quality evaluation unit (20) and a signal identification unit (21). The network portable computer incorporates the transceiving device, the antenna system for which is fixed to the computer case by a hinge.

## Description

### FIELD OF THE INVENTION

The claimed invention is related to antenna devices and transceiving equipment for transmission and reception of various types of data as used in portable network computers.

### BACKGROUND OF THE INVENTION

Wireless Local Area Networks (WLAN) have presently found a still more extensive use in IT applications for transmission and distribution of data and other information between a multitude of users, for instance, between PCs and laptop computers located in one building without impairment to the mobility of such devices. When portable computers are to be used in such networks they are fitted with antenna systems of various types and different transceiving devices. Antenna systems for such computers should be small in size, lightweight, easy to manufacture, at the same time offering a broad functional range.

An antenna system for portable computers is known, which consists of a substrate on one side of which two slot antennas are formed in the conductive layer. On the other side of the substrate two current-carrying lines are located to connect the slot antennas electrically with appropriate feeder points [1]. In the known antenna system one antenna operates in the reception mode, and the other one - in the transmission mode, which eliminates the reception/transmission switch. However, the functionality of the known antenna system is very much limited, because the device can operate in one mode only, in dependence of the size: either omnidirectional or unidirectional.

An omnidirectional antenna is used in the known transceiving device for WLAN users [2]. The known transceiving device is comprised of a transceiver equipped with an omnidirectional antenna and connected to the bus to which the processor, the memory unit and the waiting mode timer are connected, in their turn connected to the self-contained power source wired to the transceiver via a switch connected with the waiting mode timer and the power control circuit. The known transceiving device makes it possible to extend the service life of the self-contained power source for the network users. At the same time, the use of the omnidirectional antenna restricts the WLAN range, generally determined by the emission power of the transceiver and the sensitivity of its receiver, which usually cannot be sufficiently increased with mobile network users powered by self-contained power sources. Besides, the known transceiving device does not guarantee the acceptable reliability of radio communication because of possible multipath interference at the point of signal reception, and the fading effect.

A portable network computer is known, comprised of a case made of a main unit and a display unit joined together and fitted for rotation around the horizontal axis, the display unit of which contains a transceiving device with a flat panel omnidirectional antenna [3]. The use of the omnidirectional antenna in the known portable network computer restricts the reach range or range of action of the computer in the network, generally determined by the emission power of the transceiver and the sensitivity of its receiver, which usually cannot be sufficiently increased with mobile network users powered by self-contained power sources. Besides, a specially designed computer case is necessary for placing the antenna inside the display unit.

An antenna system for a portable computer is known, including two separated substrates, on which antennas connected with a commutation switch are formed by printing [4]. The known antenna system makes it possible to alleviate the effect of fading, however, this is attained through an undesirable increase in the size of the antenna system, besides, here the antenna system has a permanent configuration of the directional pattern, reducing its functionality.

A transceiving device for use in WLAN is known [5], comprising several antennas connected to a commutation switch used for switching on the antenna with better performance characteristics during the transmission of the data packet preamble. This transceiving device makes it possible to minimize fading, however the range limitations inherent to the devices using the omnidirectional antenna for data transmission and reception are present in this device as well.

A portable network computer is known [4], comprised of a case made of a main unit and a LCD display unit with an antenna system joined together and fitted for rotation around the horizontal axis. The antenna system is made of two substrates with antennas printed on them and connected to a commutation switch. The substrates are fixed orthogonal on an electromagnetic screen located in the display unit behind the display. The known portable network computer can go into wireless communication using one of the two antennas for which the conditions of transmission and reception are better. However, using such separated omnidirectional antennas is still prone to the same range limitations that are characteristic for network computers using one omnidirectional antenna for data transmission and reception.

The closest to the claimed invention in what regards the antenna system is an antenna system with a controlled directional pattern [6], comprising a dielectric substrate with a hollow cylindrical element placed in its center and located on one side of the substrate, whose outside surface is fitted with a multitude of radial fins, between which a multitude of linear rows of pins are placed in a fan-like fashion. The dielectric substrate, the cylindrical element with fins and the pins have a conductive coating and perform functions of a grounded plane, a reflector and directors, respectively. Active elements are placed in the openings in the dielectric substrate in the same plane with the directors. Each active element, segment of the cylindrical element with two fins and linear row of pins form a respective antenna of the antenna system. A commutation switch connected to the said antennas is installed in the cavity of the cylindrical element.

The prototype antenna system permits to extend the reach range or range of action of the portable network computer through the use of directional antennas, by switching for transmission/reception to the antenna which will provide the best available conditions for wireless communication. Still, this antenna system is of a sophisticated design and requires an additional space inside the computer case for installation. Using a single directional antenna for wireless communication will reduce the functionality of the antenna system, since in such case simultaneous wireless exchange of the user with several partners over the local area network will be impossible.

The closest to the claimed invention in regard to the transceiving device is the transceiving device [7], having an antenna system with directional antennas. This system includes at least one directional antenna and one omnidirectional antenna, connected via the commutation switch to the movable contact of the reception/transmission mode switch, whose fixed contacts are connected to the input of the receiver and the output of the transmitter, respectively. The first output of the receiver is connected to the first input of the controller, and the second output of the receiver is connected to the input of the signal quality measurement unit, whose output is connected to the second input of the controller. The first output of the controller is connected to the antenna commutation switch unit, the second output of the controller is connected to the first input of the transmitter, and the third output of the controller is connected to the second input of the transmitter. The controller has bi-directional communication with the memory unit and the user interface.

The prototype transceiving device employs the omnidirectional antenna while the communication is being established, for the purpose of subsequent orientation of the directional antenna to be used for data transmission and reception. This approach makes it possible to improve the reliability (quality) of the wireless communication between two users by reducing the influence of multi-beam interference and fading. However, these advantages are offset by a longer time of data transmission and impossibility to transmit data to several network users simultaneously. The known prototype device cannot increase the reach of range or range of action for the network users, like the devices where spaced antennas are used, because during the first stage of establishing the communication both transmission and reception are performed with omnidirectional antennas.

The closest to the claimed invention in regard to the personal network computer is the computer [8], equipped with an antenna system with a controlled directional pattern. The known portable network computer includes a case made of a display unit and a main unit, connected for rotation around the horizontal axis. The antenna system consists of a directional spiral antenna with a step motor drive used for orientation of the antenna in the desired direction. The antenna system itself is placed in the main unit and can be pulled out of the computer case for the duration of the wireless contact.

The portable network prototype computer equipped with an antenna system with controlled directional pattern has an increased range of action or reach range within a local area network, but the fact that the step electric motor is used for the orientation of antenna, prevents timely monitoring of changes in the conditions of wireless communication in the network, which may have a negative effect on the quality of radio communication. The functionality of such computer is also limited due to impossibility of simultaneous wireless radio communication with several network users. Placing the antenna system inside the computer will require major alterations of the design of its case.

### SUMMARY OF THE INVENTION

A group of inventions is claimed herein. The engineering problem which the claimed inventions are aimed at, is the development of an antenna system, as well as of a transceiving device to use it and a portable network computer, which, preserving the advantages of the prototypes, would enhance the functionality when operating in the local area network without any major changes in the design of the portable computer.

In regard to the antenna system, the essence of the claimed invention lies in that the antenna system with controlled directional pattern is comprised of a flat substrate carrying at least two directional flat antennas oriented in a fan-like fashion, and includes a commutation switch for controlling the directional pattern of the antenna system, the commutation switch being made so as to provide for connection of one or two or more antennas at the same time.

The fact that the antenna system is made in the form of a substrate carrying directional flat antennas oriented in a fan-like fashion, with the directional pattern control commutation switch connected to them, ensures the operation of the device in different modes: omnidirectional mode, directional scanning mode and stationary directional mode. At that, the commutation switch can connect a single antenna for reception/transmission, or two or more antennas at the same time, which makes it possible to alter the configuration of the directional pattern of the antenna system on the whole at will, thus making sure that the directional pattern is in full agreement with the specific conditions of reception/transmission.

Any known antenna types can be used as above-mentioned antennas, e.g. traveling-wave antennas, slot antennas, dielectric antennas made flat. The antennas may be located both on the substrate surface and within substrate body.

If antennas whose design requires a reflector are to be used, the commutation switch can be placed between the antennas and fitted with a grounded case, the facets of the case used as reflectors for such antennas, thus permitting to make the size of the antenna system smaller.

In the claimed antenna system, the antennas may be made as traveling-wave antennas, at least three in number, and located on the both sides of the substrate, the orientation of antennas on one side of the substrate being made different from that on the other side of the substrate.

In the claimed antenna system an additional antenna may be installed, including an active element and a reflector located along the line essentially perpendicular to the substrate. In this case the commutation switch may be located behind this antenna and fitted with a grounded case, the facet of the grounded case of the commutation switch facing the active element of the antenna to be used as a reflector for the antenna. Installation of an additional antenna extends the possibility of controlling the directional pattern of the antenna system in the direction perpendicular to the substrate plane.

In the claimed antenna system two opposite-oriented additional antennas may be installed, placed on the different sides of the substrate and including both the active element and the reflector located essentially along the line perpendicular to the substrate. In this case the commutation switch can be placed between these antennas and fitted with a grounded case, and the facet of the grounded case of the commutation switch facing the active element of the additional antenna can be used as a reflector for at least one of the additional antennas. The availability of the second additional antenna also enhances the possibility of control over the directional pattern of the antenna system in the direction perpendicular to the substrate plane.

In respect to the transceiving device, the essence of the claimed invention lies in that the transceiving device incorporates the above antenna system with controlled directional pattern in any of the specific cases of its implementation described, as well as a reception/transmission mode switch, a receiver, a transmitter, a control unit for controlling the operation of the above-mentioned antenna system in the omnidirectional mode, directional scanning mode or stationary directional mode, and a controller, with the commutation switch of the above-mentioned antenna system being connected to the first input/output of the reception/transmission switch, the output of which is connected to the input of the receiver and the second input is connected to the output of the transmitter, the output of the receiver is connected to the first input of the controller, the first output of the controller is connected to the above-mentioned control unit, whose output is connected to the respective input of the antenna system commutation switch, the second output of the controller is connected to the input of the transmitter, and the third output of the controller is designed for connection with the user's device intended for data reception and/or transmission.

Such design of the transceiving device, alongside with an increase in its reach of action or reach range, provides for an extension of its functionality owing to its capacity to maintain wireless radio communication both with a specific network user when the antenna system operates in the directional mode, and with all network users simultaneously when the antenna system operates in the omnidirectional mode.

The transceiving device may additionally include a signal quality evaluation unit and the signal identification unit, with the output of the receiver being connected to the input of the signal quality evaluation unit and the input of the signal identification unit, the output of the signal quality evaluation unit is connected to the second input of the controller whose third input is connected to the output of the signal identification unit. In this case it becomes possible to control the directional pattern of the antenna system taking into consideration the optimal conditions for reception/transmission.

In respect to the portable network computer, the essence of the invention claimed herein lies in that the portable network computer includes a case made of a display unit and a main unit joined with a hinge, and a transceiving device equipped with the above-described antenna system with controlled directional pattern, fixed to the case with a hinge.

In order to mount the claimed antenna system on the portable computer for operation, it is sufficient to fit the outside surface of the display unit with a hinge, to which the antenna system will be fixed. The flat shape of the antenna system allows it to be placed in a shallow compartment on the outside surface of the display or main unit, or in a plastic pocket attached to the computer case. At the same time the display unit will serve as an electromagnetic shield protecting the user from the emission of the antenna system.

The antenna system can be fixed on a hinge to the outer surface of the display or main unit of the computer case, or to the edge of the display unit. Any known type of hinge can be used for the purpose, including the ball-and-socket hinge which will make it possible to fix the antenna system to the display unit in a single point. The antenna system can be made removable, for this purpose the said hinge joint used for affixing the antenna system, is made detachable.

### BRIEF DESCRIPTION OF THE DRAWINGS

The claimed group of inventions is illustrated with the following graphic materials and diagrams, showing:
Fig. 1 - an example of the embodiment of the antenna system with two flat Yagi antennas oriented towards opposite directions;
Fig. 2 - the same, with Yagi antennas located on the substrate surface (side view);
Fig. 3 - the same, with Yagi antennas located within the substrate body (side view);
Fig. 4 - an example of the embodiment of the antenna system with two flat Yagi antennas oriented towards opposite directions and sharing a common reflector;
Fig. 5 - an example of the embodiment of the antenna system with four flat dielectric antennas and the commutation switch located between them;
Fig. 6 - an example of the embodiment of the antenna system with four flat Yagi antennas, the facets of the grounded case of the commutation switch serving as reflectors;
Fig. 7 - an example of the embodiment of the antenna system with five flat Yagi antennas;
Fig. 8 - an example of the embodiment of the antenna system with two flat Yagi antennas located on one side of the substrate and two Yagi antennas located on the other side of the substrate (top view);
Fig. 9 - the same as in Fig. 8, bottom view;
Fig. 10 - an example of the embodiment of the antenna system with two flat Yagi antennas oriented towards opposite directions, and one additional antenna;
Fig. 11 - the same as in Fig. 10, side view;
Fig. 12 - an example of the embodiment of the antenna system with two flat Yagi antennas oriented towards opposite directions, and two additional antennas located on different sides of the substrate;
Fig. 13 - an example of the embodiment of the antenna system with four flat traveling-wave antennas and one additional antenna located on the same side of the substrate;
Fig. 14 - the resultant directional pattern with all antennas of the system shown in Fig. 11 switched on, in the plane perpendicular to the substrate;
Fig. 15 - directional patterns of the antenna system shown in Fig. 12, in the plane perpendicular to the substrate (dotted line - the directional pattern of the flat Yagi antenna, dash-dot line - the directional pattern of the additional antenna, solid line - the resultant directional pattern with one Yagi antenna and one additional antenna switched on simultaneously);
Fig. 16 - the resultant directional pattern with all antennas of the system shown in Fig. 12 switched on, in the plane perpendicular to the substrate;
Fig. 17 - the flow chart of the claimed transceiving device;
Fig. 18 - the flow chart of one of the versions of implementation for the claimed transceiving device with the signal quality evaluation unit and the signal evaluation unit switched on in addition;
Fig. 19 - side view of one of the versions of the claimed portable network computer;
Fig. 20 - side view of the second version of the claimed portable network computer;
Fig. 21 - side view of the third version of the claimed portable network computer;
Fig. 22 - axonometric view of the claimed portable network computer.

### DETAILED DESCRIPTION

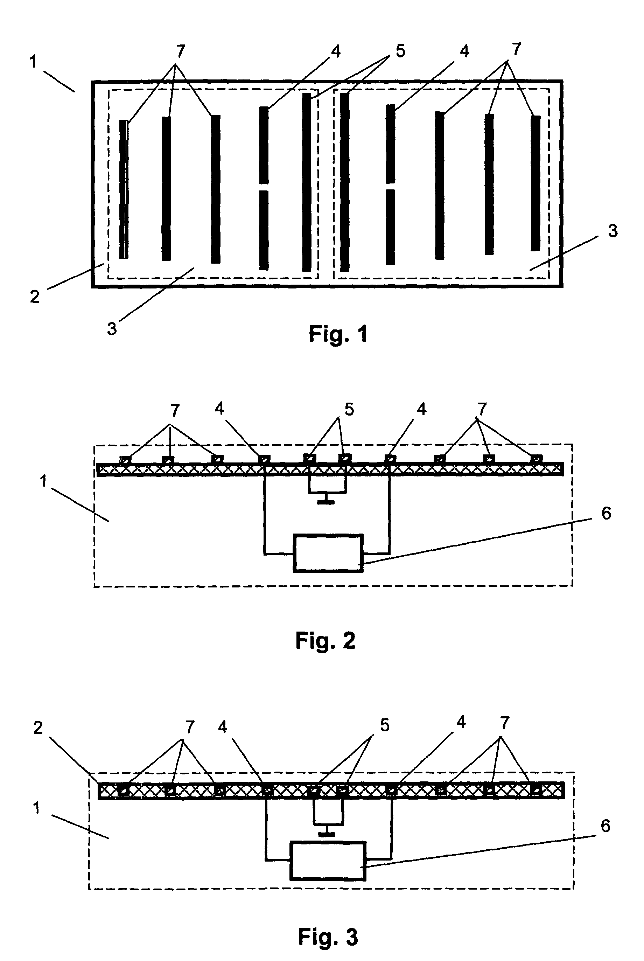

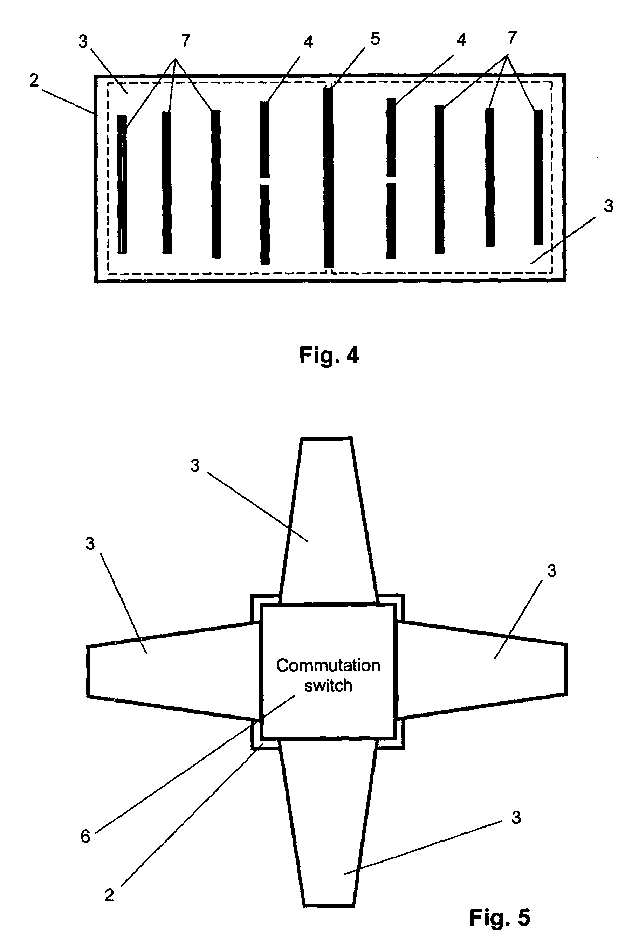

The claimed antenna system 1 in the simplest configuration includes substrate 2, on the surface of which two flat antennas 3 oriented in opposite directions are formed, for instance, by printing (see Fig. 1 and Fig. 2 where two Yagi antennas are shown as an example), consisting of active elements 4, reflectors 5. Active elements 4 are connected to commutation switch 6, controlling the directional pattern of antenna system 1 on the whole. Antennas 3 can be equipped with directors 7 to shape a narrow directional pattern of antennas 3. Antennas 3 can be located both on the surface of substrate 2 (see Fig. 2) and in the body of substrate 2 (see Fig. 3). To reduce the size of antenna system 1, antennas 3 may have a common reflector 5 (see Fig. 4).

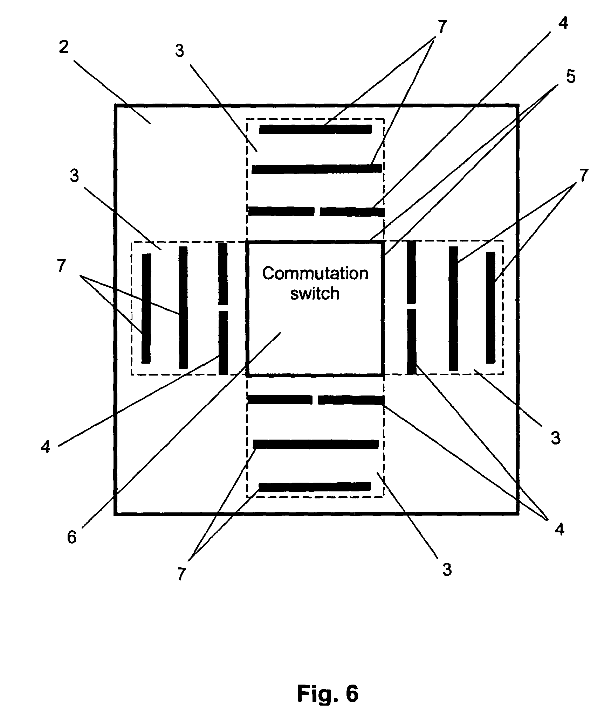

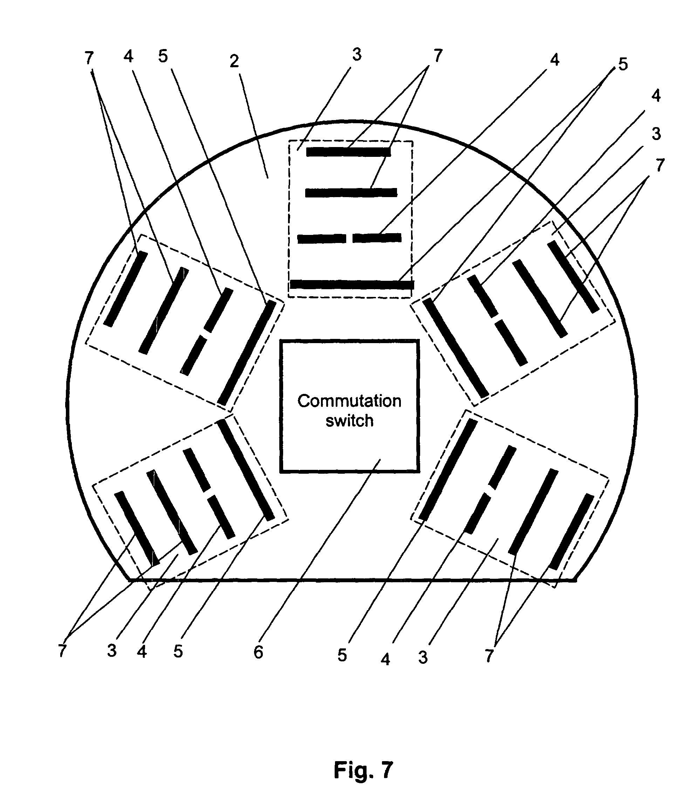

Antenna system 1 may be made, for instance, as four dielectric antennas 3, oriented in a fan-like fashion (see Fig. 5), with commutation switch 6 placed between them. Commutation switch 6 can be equipped with a grounded case whose facets serve as reflectors 5 of Yagi antennas 3 (see Fig. 6). In Fig. 7 a sample placement of five flat Yagi antennas 3 on substrate 2 is shown.

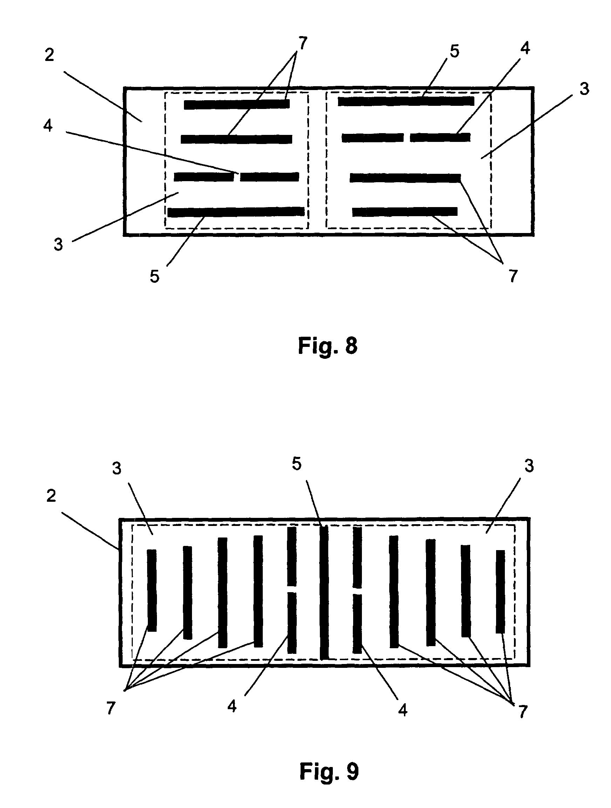

Antennas 3, made as flat traveling-wave antennas, can be placed in a fan-like fashion on both sides of substrate 2. In Fig. 8 (top view) and Fig. 9 (bottom view) a sample placement of four Yagi antennas 3 in this fashion is given.

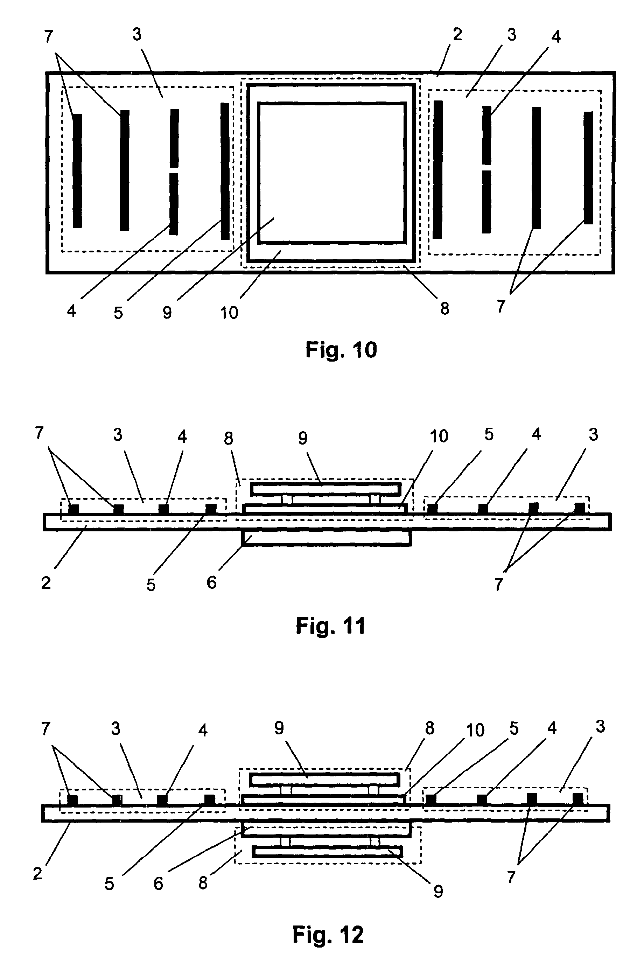

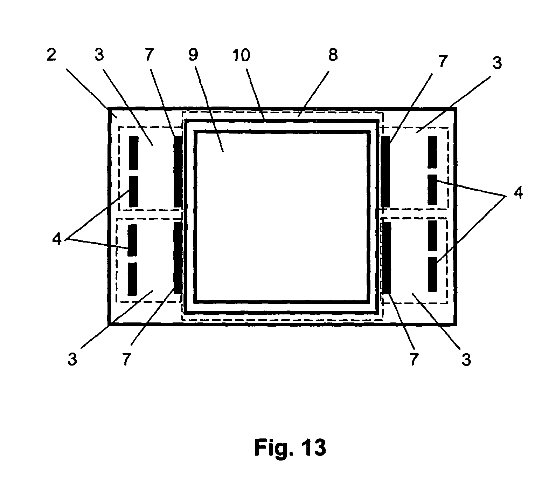

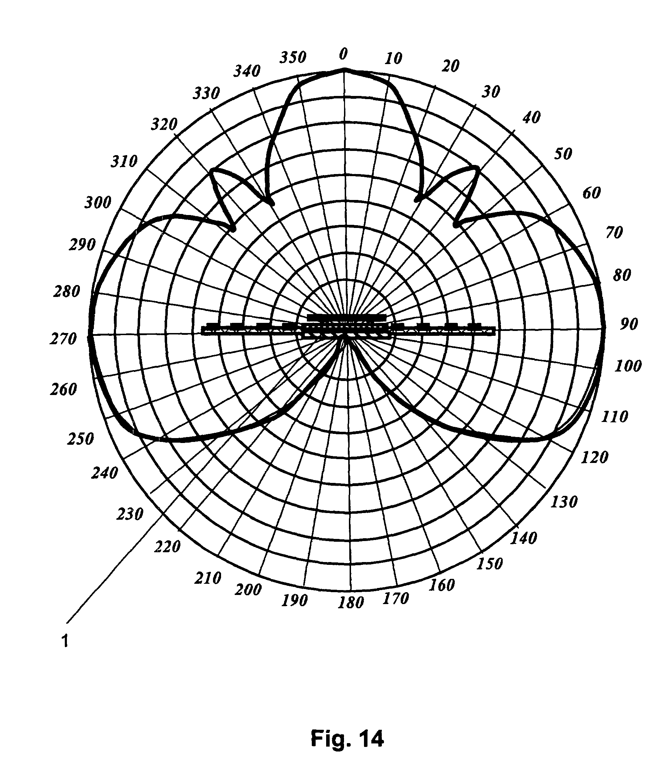

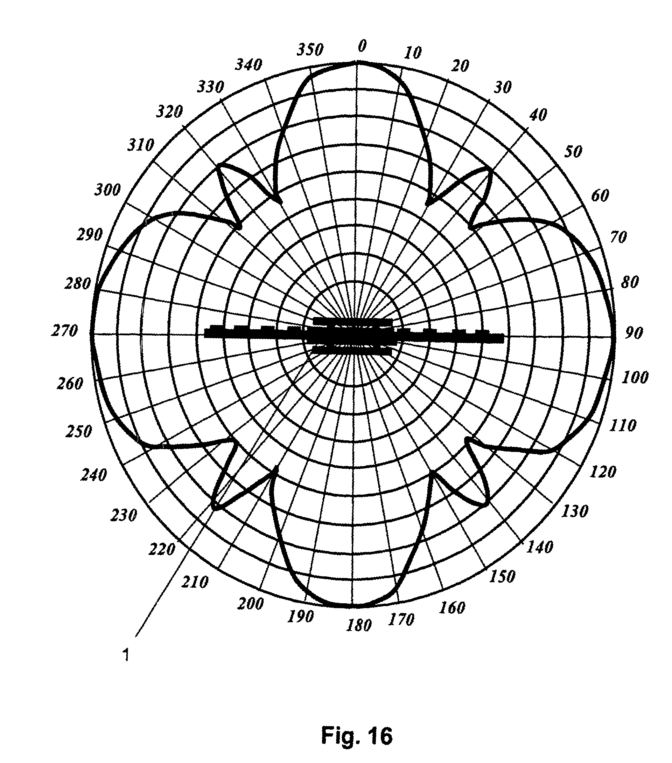

For a wider coverage of the working space a single additional antenna 8 can be installed in antenna system 1, consisting of active element 9 and reflector 10 (see Fig. 10, Fig. 11 and Fig 13). The directional pattern of antenna system 1 shown in Fig. 11 with all its antennas 3 and 8 working simultaneously, is given in Fig. 14. In antenna system 1 (see Fig. 12) two additional antennas 8 can be installed - one on either side of substrate 2. The directional pattern of such antenna system 1 with all its antennas 3 and 8 working simultaneously, is given in Fig. 16.

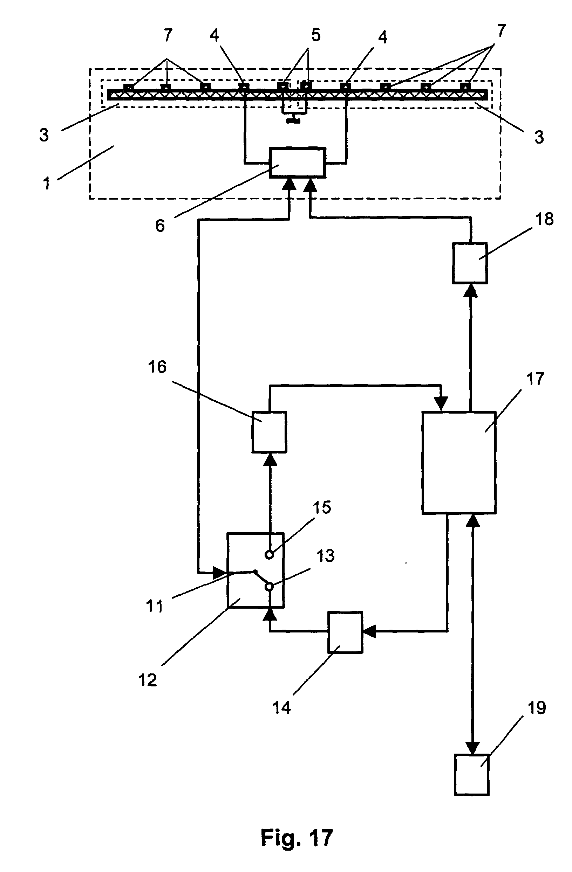

The transceiving device with the claimed antenna system is shown in Fig. 17. The transceiving device includes antenna system 1, commutation switch 6 of which is connected to the first input/output 11 of reception/transmission mode switch 12. The second input 13 of reception/transmission mode switch 12 is connected to the input of receiver 16. The output of receiver 16 is connected to the first input of controller 17. The first output of controller 17 is connected to operation control unit 18 of antenna system 1, which ensures the operation in omnidirectional mode, directional scanning mode or stationary directional mode, the second output of controller 17 is connected to the input of transmitter 14, and the third output of controller 17 is designed for connection with the user's equipment 19 (a computer, for example) with the purpose of reception and/or transmission of data.

The transceiving device (see Fig. 17) can be supplemented with signal quality evaluation unit 20 and signal identification unit 21. In this version of the transceiving device implementation the output of receiver 16 is additionally connected to the input of signal quality evaluation unit 20 and to the input of signal identification unit 21, while the output of signal quality evaluation unit 20 is connected to the second input of controller 17, whose third input is connected to the output of signal identification unit 21. Such implementation of the transceiving device enhances its functionality, in particular, it permits to identify the received signal and, upon evaluation of the power characteristics of the received signal, to perform orientation of the antenna system 1 in the direction where the reception of this signal will be the best.

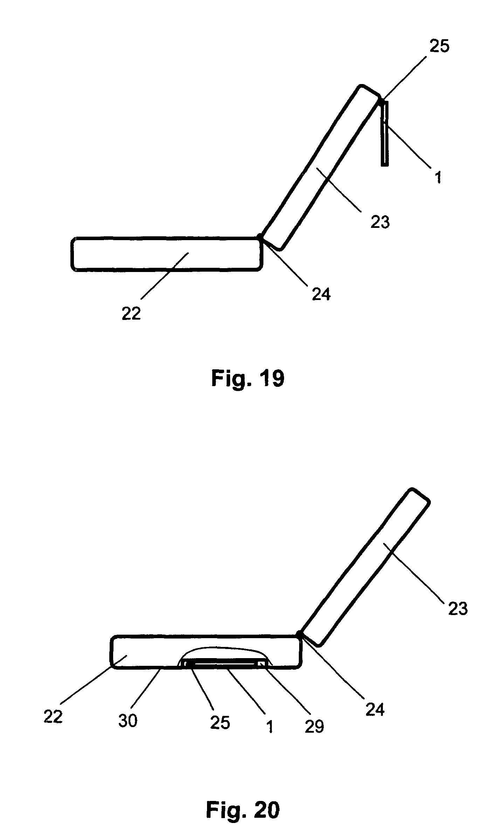

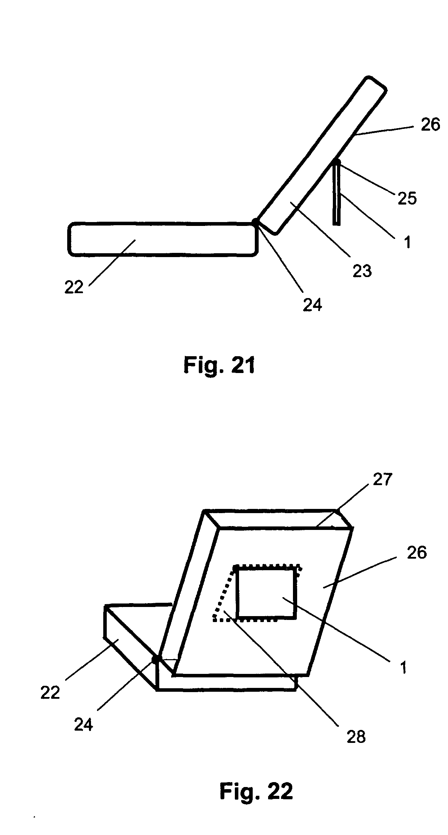

The portable network computer, in which the claimed antenna system is utilized (see Fig. 19, Fig. 20, Fig. 21 and Fig. 22), includes a case made of main unit 22 and display unit 23, joined together by hinge 24. Antenna system 1 with controlled directional pattern is fixed to display unit 23 by means of hinge 25. Other components of the transceiving device are located in main unit 22 and are not shown in Fig. 19-22. Antenna system 1 can also be located in recessed compartment 28 on the outside surface 26 of unit 23 (see Fig. 22) or in recessed compartment 29 on the outside bottom surface 30 of main unit 22 (see Fig. 20). Antenna system 1 can also be made detachable and stored in a separate package.

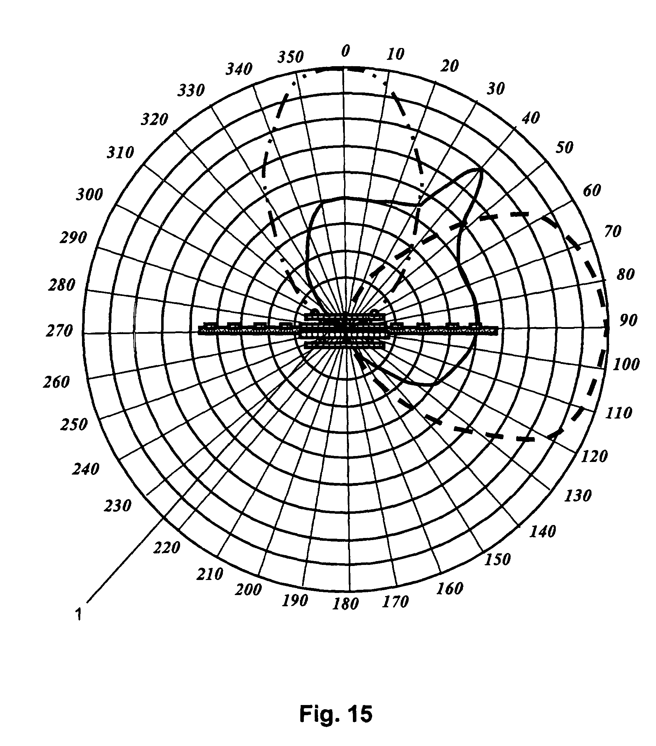

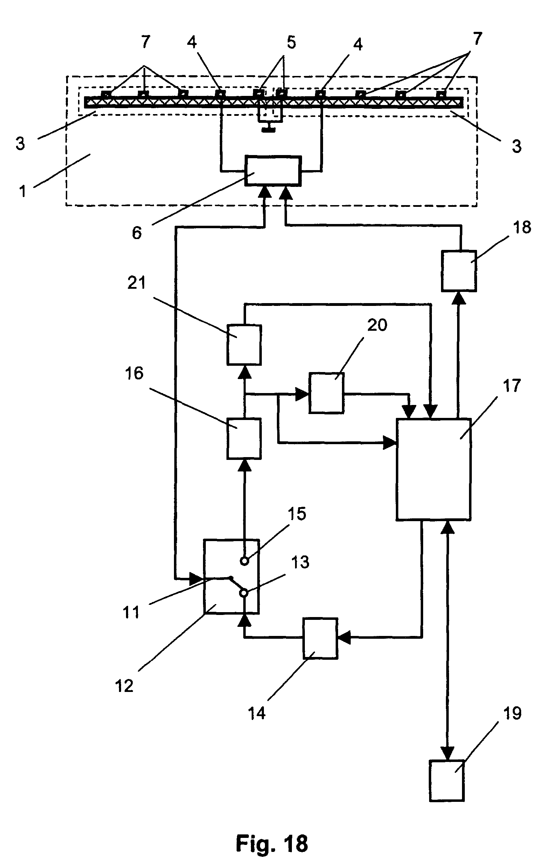

The portable computer is used in the network in the following way. Before radio contact user 19 scans the radio space with antenna system 1, functioning in directional mode. Scanning can be performed in dependence of the actual implementation of antenna system 1 in the direction of the azimuth, elevation and in both the direction of the azimuth and elevation, thus covering the hemisphere or the whole sphere of radio space. In Fig. 15 possible configurations of the directional pattern of antenna system 1 as shown in Fig. 12, are given as an example, with a single antenna 3, a single additional antenna 8, or simultaneously antenna 3 and antenna 8 switched on by commutation switch 6. Scanning can be performed in different ways: step scanning (advancing by a chosen angle or pendulum-type), including that in the predetermined half of the radio space with better conditions for signal reception, with a pitch of 45°, 60°, 90°, 120°, 180°, switching the directional pattern electronically, or using other known techniques. In this mode the search for the source of the signal from other network users takes place. As soon as the useful signal is identified by the signal identification unit 21, one of power parameters of this signal (for instance, the signal level or the signal-to-noise ratio) is measured by signal quality evaluation unit 20 at different positions of the directional pattern of the antenna system 1. Additionally the measurement of the power parameter can be taken with various polarization of the signal. The results of the measurements are fed to controller 17, which generates the control signal for unit 18 to set the directional pattern of antenna system 1 in the direction corresponding to the best or the preset quality of the received signal, after which the user's equipment 19 goes into the reception mode, receiving data, which from receiver 16, arrive to controller 17 (Fig. 18). After the decision on data transmission is taken, antenna system 1 scans the radio space to avoid collisions. If the radio space is vacant, antenna system 1 is switched to the omnidirectional mode using the directional pattern switching unit 18, the first input/output 11 of reception/transmission switch 12 is connected to the output of transmitter 14, and the data is transmitted.

### TECHNICAL APPLICABILITY

Samples of antenna systems with controlled directional pattern (shown in Fig.1, Fig. 6, Fig. 7, Fig.11, and Fig.12) were manufactured. A transceiver (the diagram of which is shown in Fig. 18) was equipped with these samples. The samples of antenna systems were installed on computers as shown in Fig. 19 and Fig. 21. Depending on the operational modes of antenna system, its directional pattern looked like shown in Fig. 14, Fig. 15 and Fig. 19. Antenna systems expanded the functionalities of a portable computer (when it operated in a local area network) and at the same time their application didn't require any modifications of portable computer design.

### REFERENCES CITED

1. U.S. Pat. No.6292153, H01Q 13/08,2001.
2. U.S. Pat. No.5546397, H04B 7/04, 1996.
3. U.S. Pat. No.6249254, H01Q 1/38,2001.
4. U.S. Pat. No.5138328, H01Q 1/24, 1992.
5. U.S. Pat. No.5748676, H04K 1/10, 1998.
6. U.S. Pat. No.6127987, H01Q 19/00, 2000r.
7. EP No.1063789, H04B 7/04, 2000.
8. U.S. Pat. No.5644320, H01Q 1/24,1997.

## Claims

1. An antenna system with controlled directional pattern comprising a flat substrate carrying at least two fan-like oriented directional planar antennas and a commutation switch for controlling directional pattern of said antenna system, wherein said commutation switch is made so as to provide for switching on either of the said antennas or switching on two or more said antennas simultaneously.

2. The antenna system of claim 1, wherein in case the said antennas equipped with reflectors are used, the said commutation switch is placed between the said antennas and fitted with a grounded case, with the side facets of the said commutation switch case being used as reflectors of the said antennas.

3. The antenna system of claim 1, wherein the said antennas are made as traveling-wave antennas, no fewer than three in number, located on the both sides of the substrate, the orientation of the said antennas located on one side of the said substrate being different from the orientation of the said antennas located on the other side of the said substrate.

4. The antenna system of claim 1, wherein it contains an additional antenna comprised of an active element and a reflector, both of them being placed along the line essentially perpendicular to the said substrate.

5. The antenna system of claim 4, wherein the said commutation switch is placed behind the additional antenna and fitted with a grounded case, and the facet of the grounded case of the said commutation switch facing the active element of the said additional antenna is used as the said reflector of the said additional antenna.

6. The antenna system of claim 1, wherein it contains two additional antennas located on different sides of the said substrate and oriented in opposite directions, comprised of an active element and a reflector, placed along the line essentially perpendicular to the substrate.

7. The antenna system of claim 6, wherein the said commutation switch is placed between the said additional antennas and fitted with a grounded case, and the facet of the said case of the commutation switch facing the said active element of the additional antenna is used as the said reflector of at least one of the said additional antennas.

8. A transceiving device incorporating the antenna system of any of claims 1-7, a reception/transmission switch, a receiver, a transmitter, the control unit for the said antenna system for controlling the operation of the said antenna system in omnidirectional mode, directional scanning mode or stationary directional mode, and a controller, wherein the commutation switch of the said antenna system is connected to the first input/output of the reception/transmission switch, whose output is connected to the input of the receiver, and the second input connected to the output of the transmitter, the output of the receiver is connected to the first input of the controller, the first output of the controller is connected to the said control unit, whose output is connected to the respective input of the said commutation switch of the antenna system, the second output of the controller is connected to the input of the transmitter, and the third output of the controller is designed for connection with the user's device serving data reception and/or transmission.

9. The transceiving device of claim 8, wherein it additionally incorporates a signal quality evaluation unit and a signal identification unit, at that, the output of the receiver is connected to the input of the signal quality evaluation unit and the input of the signal identification unit, the output of the signal quality evaluation unit is connected to the second input of the controller, to the third input of which the output of the signal identification unit is connected.

10. A portable network computer, including a case made of a display unit and a main unit joined together by a hinge, and a transceiving device fitted with the antenna system according to any of items 1-7, fixed to the said case with a hinge.

11. The computer of claim 10, wherein the said antenna system is fixed to the outside surface of the said display unit.

12. The computer of claim 10, wherein the said antenna system is fixed to the edge of the said display unit.

13. The computer of claim 10, wherein the said antenna system is fixed to the outside surface of the said main unit.

14. The computer of claim 10, wherein the said antenna system is made detachable.

15. The computer of claim 10, wherein the transceiving device is made in accordance with any of items 8-9.
